Europäisches Patentamt

European Patent Office

Office européen des brevets

(19)

(11) **EP 0 595 023 B1**

(12) **EUROPÄISCHE PATENTSCHRIFT**

(45) Veröffentlichungstag und Bekanntmachung des Hinweises auf die Patenterteilung:
**04.08.1999  Patentblatt 1999/31**

(51) Int Cl.⁶: **G02B 27/26**

(21) Anmeldenummer: **93115301.9**

(22) Anmeldetag: **23.09.1993**

(54) **Bilderzeugungssystem zum stereoskopischen Sehen**

Image-forming system for stereoscopic viewing

Système de formation d'image pour visualisation stéréoscopique

(84) Benannte Vertragsstaaten:
**AT CH DE FR IT LI NL**

(30) Priorität: **23.10.1992  DE 4235753**

(43) Veröffentlichungstag der Anmeldung:
**04.05.1994  Patentblatt 1994/18**

(73) Patentinhaber: **Carl Zeiss**
**D-89520 Heidenheim (Brenz) (DE)**

(72) Erfinder: **Grimm, Wolfgang, Dr.**
**D-89520 Heidenheim (Brenz) (DE)**

(56) Entgegenhaltungen:
**EP-A- 0 060 986**  **DE-A- 3 043 511**
**GB-A- 1 448 520**  **US-A- 4 870 486**
**US-A- 5 050 961**

**Beschreibung**

Die Erfindung betrifft ein Sehprüfsystem zum stereoskopischen Sehen mit einer polarisiertes Licht ausstrahlenden Bilderzeugungseinrichtung, welche viele einzeln ansteuerbare Bilderzeugungsbereiche auf einem Bildschirm besitzt, und einer Polarisationsbrille vor den Augen eines Beobachters.

Bilderzeugunssysteme , welche einen stereoskopischen Seheindruck vermitteln können, sind bereits bekannt. Diese arbeiten bevorzugt damit, das jedem Auge eine andere Farbe angeboten wird. Der stereoskopische Seheindruck ist dabei aber meist nicht sehr ausgeprägt. Ein bevorzugtes Anwendungsgebiet stellen dabei Sehprüfsysteme dar.

Es sind Sehproben (z.B. EP-PS 0 060 986) und Sehprüfgeräte bekannt, bei welchem ein Prüfling zur Überprüfung der monokularen und binokularen Sehfunktion durch jeweils ein Polarisationsfilter vor jedem Auge mit gegeneinander gekreuzten Schwingungsrichtungen beleuchtete Platten ansieht. Diese Platten haben Bereiche mit unterschiedlicher Polarisationswirkung, so daß der Prüfling mit seinen beiden Augen unterschiedliche Bereiche erkennen kann. Die Sehproben haben den Nachteil, daß die Intensität der Leuchtstärke von der Umgebungsleuchtstärke abhängig ist und daß für jeden Test eine Platte von Hand bewegt werden muß. Sehprüfgeräte vermeiden diese Nachteile, da bei ihnen die Platten von hinten beleuchtet werden und eine Umschaltung auf einen anderen Test durch eine Fernbedienung erfolgen kann, wobei dann mechanisch im Gerät ein Plattenaustausch erfolgt. Die bekannten Sehproben und Sehprüfgeräte haben den gemeinsamen Nachteil, daß die Platten nicht von dem Testenden ohne größere Umstände selber verändert werden können, da die Herstellung der Platten zeitaufwendig ist.

Es ist ein virtuelles stereographisches Bildgebungssystem (US-PS 4 870 486) bekannt, bei welchem vor einer bildgebenden Oberfläche eines TV-Monitors ein Polarisator und eine Flüssigkristallzelle angeordnet sind. Das von diesem Bildgebungssystem ausgehende Licht wird von einem Betrachter durch eine Polarisationsbrille betrachtet, wobei die einzelnen Gläser der Brille eine unterschiedliche Polaristionsachse haben. Dieses Bildgebungssystem ist sehr voluminös wegen des Monitors und dient lediglich der Erzeugung virtueller stereoskopischer Bilder.

Aus der US-PS 4 877 309 ist eine farbige Flüssigkristall-Bilderzeugungseinrichtung bekannt, welche mit zwei Flüssigkristall-Bilderzeugungszellen arbeitet. Vor diesen beiden Bilderzeugungszellen befinden sich jeweils zwei Farbpolarisatoren und an der Lichteinfallseite der ersten Bilderzeugungszelle befindet sich zusätzlich ein neutraler Polarisator.

Diese farbige Flüssigkristall-Bilderzeugungseinrichtung dient lediglich der Erzeugung farbiger Bilder und ist für sich genommen für ein Bilderzeugungssystem zur Erzeugung eines stereoskopischen Bildeindrucks als auch als Sehprüfsystem zur Überprüfung der binokularen Sehfunktionen ungeeignet.

Aus der DE-OS 30 43 511 ist eine Vorrichtung zur Prüfung der Funktionen des Auges und des Sehsystems bekannt. Die Darbietung erfolgt durch Monitore und zwar für die Binokularprüfung mit zwei Monitoren (mit Polarisatoren) oder mit einem Monitor (Rot-Grün-Stereop-sis). Diese Vorrichtung ist sehr voluminös und bei der Verwendung nur eines Monitors nur sehr begrenzt zur Sehprüfung verwendbar.

Außerdem vermittelt die Vorrichtung mit einem Monitor keinen stereoskopischen Seheindruck.

Unter dem vom Bilderzeugungsgerät erzeugten Bildern sollen im folgenden auch Schriften, Ziffern, Symbole, Bilder, Zeichen, usw. verstanden werden.

Es ist die Aufgabe der Erfindung ein kompaktes Sehprüfsystem zu schaffen, welches stereoskopisches Sehen bei einem guten stereoskopischen Seheindruck ermöglicht.

Diese Aufgabe wird erfindungsgemäß durch ein Sehprüfsystem nach Patentanspruch 1 gelöst.

Das erfindungsgemäße Sehprüfsystem, im weiteren auch Bilderzeugungsgerät genannt, zeichnet sich dadurch aus, daß es trotz seiner Kompaktheit sehr flexibel in seinem Einsatz ist und sehr kompakt aufgebaut werden kann. Das nach der Erfindung realisierte Bilderzeugungsgerät kann ohne mechanisch bewegte Teile aufgebaut werden, wodurch es sehr robust, verschleißfrei und störungsunanfällig wird. Es eignet sich deshalb insbesondere für eine Verwendung als Stereo-Fernseher als auch für ein kompaktes Sehprüfgerät, um nur zwei vorteilhafte Anwendungsgebiete zu nennen.

Unter Eingabeeinheit im Sinne der Erfindung ist jede Anordnung zu verstehen, welche geeignet ist, eine eindeutige Auswahl der darzustellenden Zeichen durch die Schalteinrichtung zu ermöglichen (Tastatur, Mikrophon, Berührungsflache, optischer Sensor, usw.). Es kann sich bei der Tastatur aber auch um die normale Tastatur für einen Computer handeln.

Unter einer Polarisationsbrille im Sinne der Erfindung ist z.B. eine Brillenfassung zu verstehen, die zwei polarisierende Filterscheiben enthält. Eine Filterscheibe ist dem einen Auge, die zweite Filterscheibe dem anderen Auge zugeordnet, wobei die Polarisationsachsen oder die Polarisationsrichtungen (bei zirkularer Polarisation) der beiden polarisierenden Filterscheiben aufeinander senkrecht stehen. Es kann sich aber auch um ein Paar lagestabilisierte Kontaktlinsen handeln, die das auf sie fallende Licht polarisieren können.

Die Polarisationselemente des Vektorgraphenfilms im Sinne der Erfindung haben eine Anordnung, bei welcher auf einem dünnen Träger aufeinander senkrecht stehende Polarisationsfelder nebeneinander angeordnet sind (streifenförmig, schachbrettförmig, usw.). Diese sind zu verwirklichen z.B. mit Hilfe eines sogenannten Vektographenfilms (Fa. Polarizers, USA) oder als im Druckverfahren hergestellte polarisierende Gitter (American Polarizers).

Unter Bildschirm im Sinne der Erfindung ist ein lichtausstrahlender Schirm zu verstehen, insbesondere ein Flachbildschirm mit fester geometrischer Zuordnung der bilderzeugenden Elemente (z.B. Plasmabildschirm P-B, bzw. Plasma Display Panel PDP, Elektroluminiszensbildschirm EL-B, bzw. Electroluminescens Display ELD, Flüssigkristallbildschirm FLK-B, bzw Liquid Cristal Display LCD, usw.) als auch andere Bildschirme, welche eine feste geometrische Zuordnung der bilderzeugenden Elemente ermöglichen.

Das Wort Proband steht im folgenden synonym für Betrachter, Beobachter, Prüfling, Testperson oder Patient, das Wort Rechner für Computer oder EDV-System bzw. EDV-Anlage.

Die jeweils einzeln ansteuerbaren Bereiche des Bildschirms müssen so zum Vektorgraphenfilm ausgerichtet sein, daß die Bereichsgrenzen aufeinanderfallen. Außerdem müssen sie in ihrer Größe zueinander passend sein. Das bedeutet nicht, daß sie gleich groß sein müssen. Es ist auch denkbar, daß der Bildschirm und der Vektorgraphenfilm unterschiedlich große, diskret Bereiche besitzen. Dann legt aber der Bildschirm oder der Vektorgraphenfilm mit der niedrigeren Auflösung (bzw. geringeren Anzahl von diskret ansteuerbaren Bereichen) die kleinsten darstellbaren Zeichen bzw. Bereiche fest.

Durch die Ansteuerung des Bildschirms von einer Treiberschaltung mit einer Eingabeeinheit erreicht man ein leichtes Umschalten der durch das Bilderzeugungseinrichtung erzeugten Zeichen.

Bei dem Speicher handelt es sich um eine fest vorgegebene Schaltung (ASIC, E-PROM, usw.) oder einen Rechner mit entsprechender Software. Verwendet man einen Rechner, so kann man durch einen einfachen Wechsel der Software eine Erzeugung jedes gewünschten Zeichens erreichen. Außerdem erlaubt es eine sehr leichte Größenvariation der dargestellten Zeichen, wobei die Zeichen jede gewünschte Gestalt besitzen dürfen.

Wenn man andere Zeichen darstellen will, kann man dies sehr schnell über die Eingabeeinheit einen Speicher ansprechen, welcher dann über die Ansteuerung der Treiberschaltung des Bildschirms dafür sorgt, daß das gewünschte Bild auf dem Bilderzeugungseinrichtung erscheint. Dieser Speicher befindet sich vorteilhafter Weise in einem Rechner.

Vorteilhafter Weise ist der Bildschirm ein Flachbildschirm, so daß die Bilderzeugungseinrichtung sehr kompakt aufgebaut werden kann.

Ist der Flachbildschirm durchleuchtet (z.B. ein LCD-Bildschirm), so erfolgt die Ausleuchtung im Bilderzeugungsgerät vorteilhafter Weise durch eine oder mehrere Lichtquellen.

Um eine einfache LCD-Elementanordnung verwenden zu können, bringt man vorteilhafter Weise eine Polarisationsfolie I zwischen Lichtquelle und eine LCD-Elementanordnung. Dann muß die LCD-Elementanordnung vorteilhafter Weise das durch sie dringende Licht jeweils um +45°, bzw. um -45° drehen, damit das Licht aus der Bilderzeugungseinrichtung auf die Polarisationsbrille fallen kann. Durch eine Variation des Drehwinkels können alle Lichtintensitätsstufen zwischen Dunkel und maximaler Intensität erzeugt werden.

Eine weitere Realisationsmöglichkeit mit einer einfachen LCD-Elementanordnung erhält man, wenn man zusätzlich eine weitere Polarisationsfolie zwischen Flachbildschirm und Vektorgraphenfilm anordnet. Dann muß aber der Flachbildschirm so geschaltet werden, daß das durch ihn dringende Licht um 90° gedreht wird, wenn man maximale Lichtintensität erhalten möchte.

Viele der handelsüblichen Flachbildschirme ermöglichen beide der oben erwähnten Betriebsarten.

Wenn mindestens eine der Lichtquellen in der Farbe des sie ausstrahlenden Lichtes veränderbar ist, kann auch eine farbige Darstellung erfolgen.

Insbesondere ist es vorteilhaft, einen farbigen Bildschirm zu verwenden.

Sind an der oder den Lichtquellen verschiedene, vorschaltbare Farbfilter oder sind verschiedene Lichtquellen mit unterschiedlichen Farben vorhanden, so kann bei Verwendung des Bilderzeugungssystems als Sehprüfsystem das Farbsehen des Beobachters beurteilt werden.

Verwendet man als Bildschirm einen farbigen Bildschirm (z.B. eine Einrichtung gemäß US-PS 4 877 309), so kann man bei Verwendung des Bilderzeugungssystems als Sehprüfsystem Farbsinnstörungen des Probanden feststellen. Außerdem können dann die Sehzeichen farbig dargestellt werden.

Indem man die Lichtquelle in ihrer Intensität von der Treiberschaltung variiert, kann man bei Verwendung des Bilderzeugungssystems als Sehprüfsystem eine Aussage über die Sehfähigkeit des Probanden in Abhängigkeit von der Leuchtdichte und dem Kontrast erhalten.

Da die Polarisationsachsen der Polarisationsmusterelemente des Vektorgraphenfilms und der Polarisationsbrille parallel oder senkrecht zueinander stehen müssen, um eine gute Auslöschung des jeweils nicht gewollten Bildeindrucks zu erzielen, erhält man bei leichter Kopfdrehung des Probanden keine eindeutige Bildtrennung für beide Augen. Dies gilt für die Verwendung linear polarisierender Folien. Diese Bildtrennung wird unabhängig von der Kopfdrehung des Probanden, wenn man den Vektorgraphenfilm und die Polarisationsbrille je mit einer Lambda/Viertel-Folie ausstattet, so daß aus der linearen Polarisation eine zirkulare Polarisation wird. Die Lambda-Viertel-Folien bewirken eine Rotations-Polarisation, welche von der Kopfhaltung des Beobachters unabhängig ist.

Eine bevorzugte Anwendung des Bilderzeugungssystems ist in seiner Nutzung als Sehprüfsystem zu sehen.

Wenn bei Verwendung des Bilderzeugungssystems als Sehprüfsystem die Prüfsymbole bewegte Sehzeichen sind, kann man weitere Prüfungen der Sehfunktion des Probanden durchführen.

Mit einem nach der Erfindung realisierten Sehprüfgerät bei Verwendung des Bilderzeugungssystems als Sehprüfsystem läßt sich die "Wendeprobe" bei den nach dem Stand der Technik bekannten Polatest-Geräten erstmals elektronisch realisieren, indem man beim Bildschirm die entsprechenden Pixel einfach umschaltet.

Das erfindungsgemäße elektronische Sehprüfgerät zeichnet sich dadurch aus, daß es trotz seiner Kompaktheit sehr flexibel im Einsatz ist:

- Es kann ohne mechanisch bewegte Teile aufgebaut werden, wodurch es sehr robust, verschleißfrei und störungsunanfällig wird.
- Es erlaubt eine einfache Größenvariation der dargestellten Zeichen, wobei die Zeichen jede gewünschte Gestalt besitzen können.
- Es erlaubt, Farbsinnstörungen des Probanden zu ermitteln. Dazu verwendet man mehrfarbige Bildschirme.
- Bei Verwendung bewegter Sehzeichen kann eine Prüfung der dynamischen Sehfunktion des Probanden erfolgen.
- Durch die einfach mögliche Variation der Leuchtdichte und des Kontrastes des Bildschirms kann man z.B. die Kontrastempfindlichkeit, das Adaptionsverhalten und weitere Funktionen des Gesichtssinnes bestimmen.
- Bei Anwendung zur binokularen Prüfung nach dem Polatest-Verfahren kann die "Wendeprobe" elektronisch realisiert werden. Dazu muß lediglich auf dem Bildschirm dafür gesorgt werden, daß diejenigen Teile des Sehzeichens, die nur einem Auge dargebotei, werden, bei der Wendeprobe nun auf die Wahrnehmung durch das andere Auge umgeschaltet werden.
- Blickt der Proband ohne Polarisationsbrille auf den Bildschirm, so kann die Sehprüfung monokular oder binokular nach den heute bekannten weiteren Verfahren durchgeführt werden.

Die Erfindung wird nachstehend in beispielhafter Weise anhand von Zeichnungen näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigen

Figur 1a-1e        Skizzen zur Erläuterung des Funktionsprinzips;

Figur 2        eine Skizze einer LCD-Display-Oberfläche;

Figur 3        ein erfindungsgemäßes Bilderzeugungssystem;

Figur 4a        eine Skizze eines Sehprüfsystems mit Farbfilter;

Figur 4b        das Farbfilter in Frontalansicht;

Figur 5        ein weiteres erfindungsgemäßes Sehprüfsystem; und

Figur 6        ein weiteres erfindungsgemäßes Sehprüfsystem.

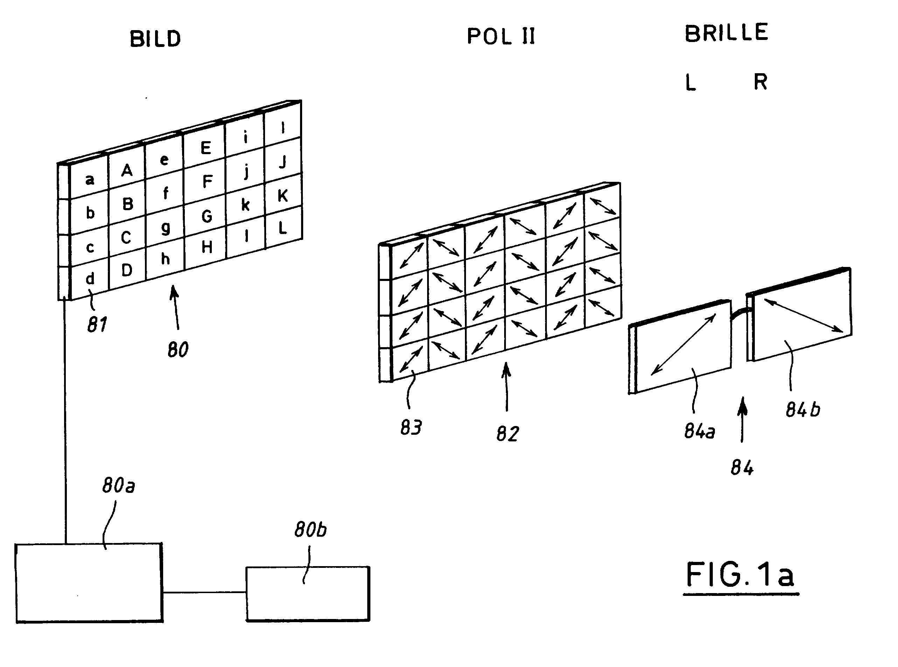

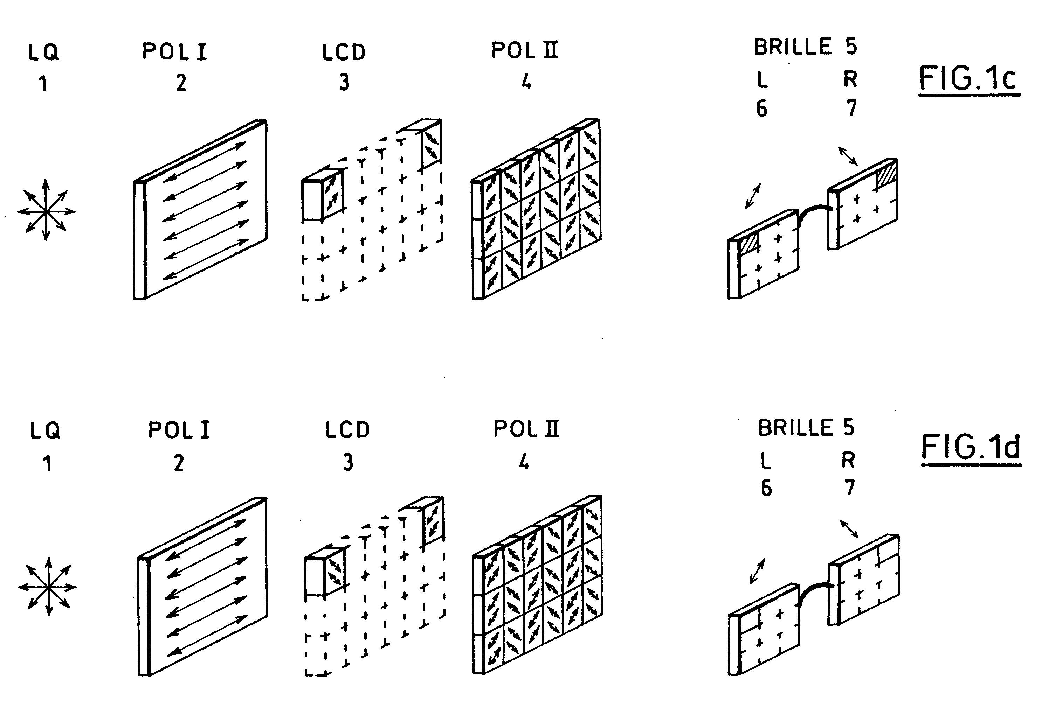

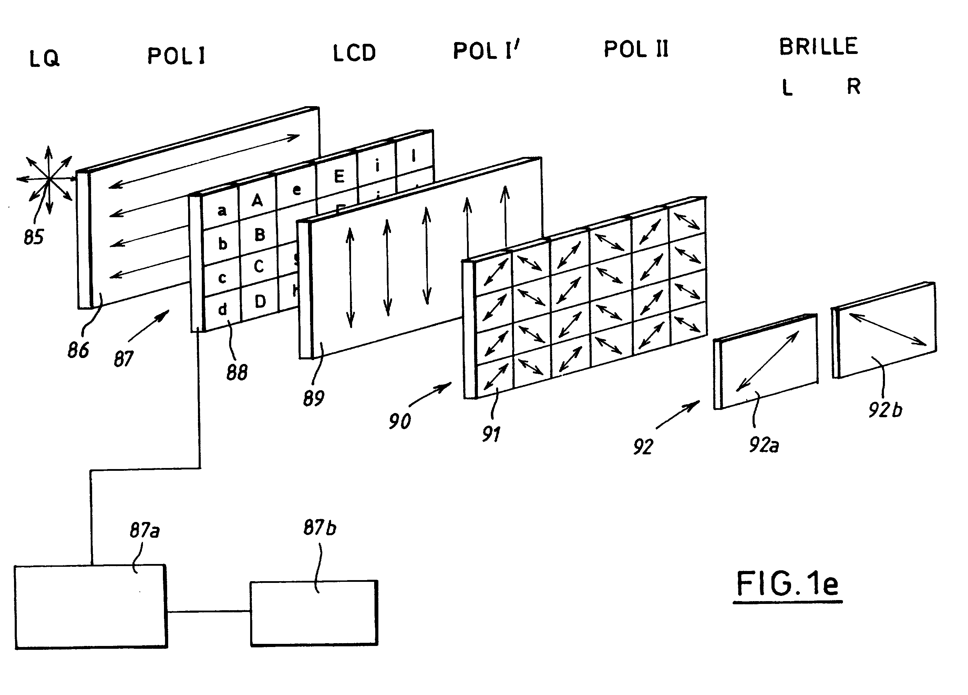

Anhand der Fig. 1a-e wird im folgenden erläutert, wie der stereoskopische Seheindruck bei einem Betrachter entsteht.

In der Fig. 1a ist eine Bilderzeugungseinheit dargestellt welche auf einem Bildschirm (80) viele örtlich einzeln ansteuerbaren Bilderzeugungselemente (81) (A-L, a-l) besitzt. Das aus den Bilderzeugungselementen (81) (A-l, a-l) austretende Licht fällt auf einen vor dem Bildschirm (80) angeordneten Vektorgraphenfilm (82) mit vielen einzelnen Polarisationselementen (83).

Die einzelnen Polarisationselemente (83) haben dieselbe Größe und Ausrichtung wie die einzelnen Bilderzeugungselemente (81). Die Polarisationselemente (83) sind streifenförmig angeordnet, wobei die Polarisationselemente (83) eines Streifens dieselbe Polarisationsrichtung besitzen. Die Polarisationselemente (83) in den nebeneinander angeordneten Streifen haben aufeinander senkrecht stehende Polarisationsachsen.

Das durch den Vektorgraphenfilm (82) durchdringende Licht fällt auf eine Polarisationsbrille (84), welche je einem Auge eines Beobachters zugeordnete Filterscheiben (84a, 84b) besitzt. Jede der beiden Filterscheiben (84a, 84b) besitzt eine Polarisationsfolie, wobei die Achsen der beiden Polarisationsfolien aufeinander senkrecht stehen.

Durch das in der Fig. 1a dargestellt Bilderzeugungssystem ist es möglich, jedem Auge des Beobachters ein eigenes Bild zu vermitteln. Das linke Auge des Beobachters sieht durch die linke Filterscheibe (84a) der Polarisationsbrille (84) das Bild der durch die Bilderzeugungselemente (81) a-i erzeugte Bild, während das rechte Auge des Beobachters durch die rechte Filterscheibe (84b) der Polarisationsbrille (84) das Bild der durch die Bilderzeugungselemente A-L erzeugte Bild sieht.

Die Bilderzeugungseinheit als solche besteht aus einem lichtausstrahlenden Bildschirm (80), welcher eine feste Zuordnung der Bilderzeugungselemente (81) besitzt.

Die Ansteuerung des Bildschirms (80) erfolgt über eine Treiberschaltung (80a), welche mit einer Eingabeeinheit (80b) verbunden ist.

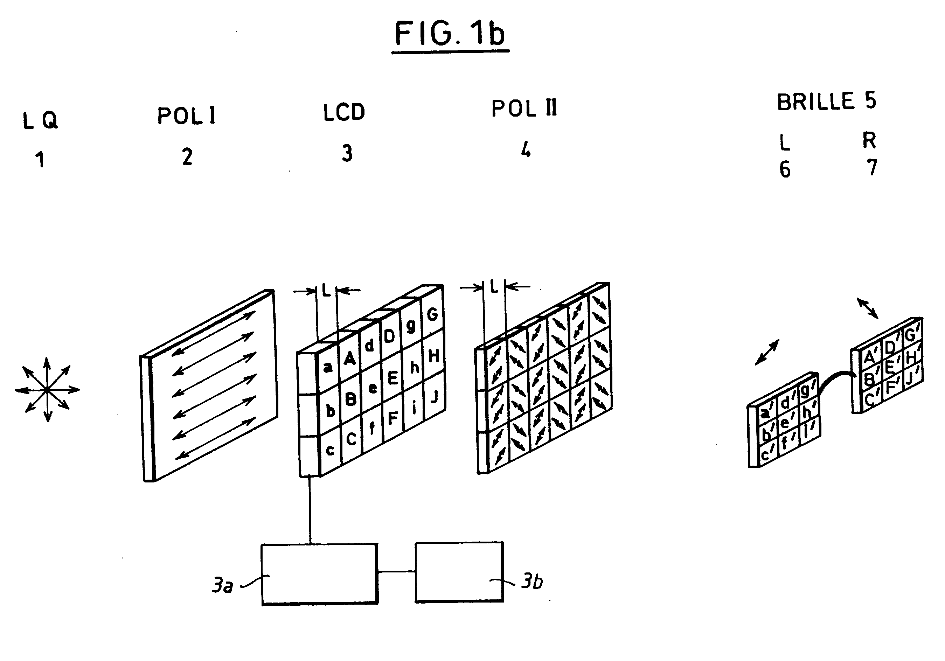

In der Fig. 1b ist eine weitere Ausgestaltungsmöglichkeit gemäß der Erfindung dargestellt.

In der Fig. 1b geht das Licht von einer Lichtquelle LQ (1) aus und erhält durch ein farbneutrales, durchsichtiges Polarisationsfilter POL I (2) eine waagrechte Polarisation. Danach fällt das polarisierte Licht auf die Rückseite des Flüssigkeitskristall-Displays LCD (3), welches aus vielen; einzeln ansteuerbaren Flüssigkristall-Elementen oder - Zellen (a-i, A-J) besteht. Jedes der einzelnen Flüssigkristall-Elemente (a-i, A-J) ist in der Lage, das Licht um + 45° oder um -45° zu drehen.

Direkt vor dem LCD (3), welcher als Flachbildschirm dient, befindet sich ein Vektorgraphenfilm POL II (4). Dieser Vektorgraphenfilm (4) ist im Prinzip ein Polarisationsfilter, welches streifenförmig aufgebaut ist. Die Streifen des Vektorgraphenfilm (4) liegen direkt nebeneinander, haben die gleiche Breite L wie die LCD-Elemente (a-i, A-J) aber haben eine abwechselnd aufeinander senkrecht stehende Polarisation, deren Polarisationsachse jeweils um 45° gegenüber der Polarisationsachse des Polarisationsfilters POL I (2) gekippt ist.

Die von der Eingabeeinheit (3b) über die Treiberschaltung (3a) direkten, einzeln ansteuerbaren LCD-Elemente (a-i), welche zugleich die diskreten Bilderzeugungsbereiche darstellen, werden zur Darstellung eines Bildes auf der linken Brillenseite L (6) der Brille (5) vor dem Auge des Betrachters (nicht eingezeichnet) verwendet, während die diskreten, einzeln ansteuerbaren LCD-Elemente (A-J) zur Darstellung eines Bildes auf der rechten Brillenseite R (7) der Brille (5) verwendet werden. Die Filterscheiben (6,7) der Brille (5) haben auch Polarisationsfolien, deren Polarisationsachsen senkrecht zueinander und parallel zu den Polarisationsachsen des Vektorgraphenfilms (4) angeordnet sind.

Anzumerken ist an dieser Stelle, daß die Flüssigkeitskristall-Displays normalerweise aus mehreren hundert mal mehrere hundert LCD-Elementen bestehen, so daß bei genügend großem Abstand des Betrachters vom Display keine Streifen sichtbar sind.

Wenn nun ein Punkt als Feld (a') auf die linke Brillenseite (6) abgebildet werden soll, so muß das LCD-Element (a) das von dem Polarisationsfilter POL I (2) kommende Licht um + 45° drehen. Dann stimmt die Polarisationsachse des aus dem LCD-Element (a) austretenden Lichts mit der Polarisationsachse des davor befindlichen Streifens des Vektorgraphenfilms (4) und der Polarisationsachse der linken Brillenseite L (6) überein, so daß das von der Lichtquelle LQ (1) kommende Licht in das (hier nicht eingezeichnete) Auge des Betrachters fallen kann (siehe Fig. 1c).

Soll hingegen das Licht der Lichtquelle LQ (1) in das (hier nicht eingezeichnete) rechte Auge des Betrachters fallen, so muß das LCD-Element (G) das von dem Polarisationsfilter Pol I (2) kommende Licht um - 45° drehen. Dann stimmt die Polarisationsachse des aus dem LCD-Elementes (G) austretenden Lichts mit der Polarisationsachse des sich direkt vor ihm befindlichen Streifens des Vektorgraphenfilms POL II (4) und mit der Polarisationsachse der rechten Brillenseite R (7) überein. Dadurch kann dann ein Punkt (G') auf der rechten Brillenseite R (7) abgebildet werden (siehe auch Fig. 1c).

Exemplarisch für die LCD-Elemente a und G des LCD-Displays LCD (3) ist in Fig. 1c dargestellt, wie man verhindert, daß Licht auf die linke oder rechte Filterscheibe (6, 7) fällt.

Will man, daß kein Punkt als Feld (a') auf die linke Brillenseite (6) abgebildet wird, so muß das LCD-Element (a) das von dem Polarisationsfilter POL I (2) kommende Licht um - 45° drehen. Dann steht die Polarisationsachse des aus dem LCD-Elementes (a) austretenden Lichts senkrecht zur Polarisationsachse des sich direkt vor ihm befindlichen Streifens Vektorgraphenfilms POL II (4) und kein Licht kann die Brille (5) von dem LCD-Element (a) erreichen.

Das gleiche gilt für das LCD-Element (G), nur daß hier das LCD-Element (G) das von dem Polarisationsfilter POL I (2) kommende Licht um + 45° drehen muß. Dann steht auch hier die Polarisationsachse des aus dem LCD-Elementes (G) austretenden Lichts genau senkrecht zur Polarisationsachse des sich vor ihm direkt befindlichen Streifens des Vektorgraphenfilms POL II (4) und kein Licht kann die Brille (5) von dem LCD-Element (G) erreichen.

Die vorhergehenden Erläuterungen zeigen, daß es sehr darauf ankommt, daß die Breite L des LCD-Elements (a-i, A-J) und die Breite L der Streifen des Vektorgraphenfilms POL II (4) genau übereinstimmen und direkt übereinander angeordnet sind. Bei nicht genauer Justierung können sonst Moiré-Effekte auftreten. Diese Justierschwierigkeiten können sich bei der Justierung des Polarisationsgitters des Vektorgraphenfilms (4) mit der Zeilenstruktur (a, A, d, D, g, G, ...) als auch mit der Spaltenstruktur (a, b, c, ...) des LCD-Displays (3) ergeben. Andererseits hilft aber gerade dieser Moiré-Effekt bei der Justierung, da er ein gutes Kriterium zur genauen Zentrierung der beiden Strukturen übereinander darstellt. Als LCD-Display (3) eignet sich insbesondere ein Aktiv-Matrix LCD.

In der Fig. 1e ist ein weiteres Bilderzeugungssystem dargestellt, welches aus einer Lichtquelle (85), einer ersten Polarisationsfolie I (86), einem durchscheinenden Liquid Cristal Display (87) als Bildschirm mit vielen einzeln ansteuerbaren in einer festen geometrischen Anordnung angeordneten Bilderzeugungsbereichen (88), einer zweiten Polarisationsfolie II (89), einem Vektorgraphenfilm (90) mit vielen Polarisationselementen (91), einer Polarisationsbrille (92) sowie einer Eingabeeinheit (87b) und einer Treiberschaltung (87a) zur Ansteuerung des Displays (87) besteht.

Das von der Lichtquelle (85) kommende Licht wird durch die erste Polarisationsfolie I (86) linear polarisiert.

Dieses nun polarisierte Lacht fällt von hinten auf das Display (87) mit seinen vielen einzeln örtlich ansteuerbaren Bilderzeugungsbereichen (88), bzw. Flüssigkristallzellen. Wenn die Bilderzeugungsbereiche (88) angesteuert sind, so drehen sie das durch sie dringende Licht um 90°.

Das aus dem Display (87) austretende Licht fällt nun auf die zweite Polarisationsfolie II (89), deren Polarisationsachse um 90° gegenüber der Polarisationsachse der ersten Polarisationsfolie I (86) gedreht ist. Nur das von den Bilderzeugungsbereichen (88) gedrehte Licht kann durch die zweite Polarisationsfolie II (89) dringen, während das nicht durch die Bilderzeugungsbereiche (88) gedrehte Licht von der zweiten Polarisationsfolie II (89) abgeblockt wird. Das von der zweiten Polarisationsfolie II (89) kommende Licht fällt nun auf einen Vektorgraphenfilm (90) mit vielen Polarisationselementen (91), wobei die einzelnen Polarisationselemente (91) in Größe und Ausrichtung mit den einzelnen Bilderzeugungsbereichen (88) übereinstimmen.

Das aus dem Vektorgraphenfilm (90) austretende Licht fällt auf eine Polarisationsbrille (92) mit zwei Filterscheiben (92a, 92b), auf welchen sich jeweils eine Polarisationsfolie befindet. Die Polarisationsachse der Polarisationsfolie auf der einen Filterscheibe (92a) steht dabei senkrecht zur Polarisationsachse der anderen Polarisationsfolie auf der zweiten Filterscheibe (92b).

Durch dieses in der Fig. 1e dargestellte Bilderzeugungssystem ist es nun möglich, das die Bilderzeugungsbereiche (88) a-l des Displays (87) durch die linke Filterscheibe (92a) der Polarisationsbrille (92) auf das linke Auge eines Beobachters abgebildet werden, während die Bilderzeugungshereiche (88) A-L des Displays 157) durch die rechte Filterscheibe (92b) der Polarisationsbrille (92) auf das rechte Auge des Beobachters abgebildet werden.

Zusammenfassend kann die Funktionsweise dieser Anordnungen dadurch charakterisiert werden, daß eine Polarisationsrichtung konstant einem Auge zugeordnet ist und die andere, senkrecht zur vorstehenden Polarisationsrichtung dein anderen Auge eines Betrachter, wenn dieser eine Polarisationsbrille trägt, deren Gläser aufeinander senkrecht stehende Polarisationsachsen besitzen, welche parallel zu den Polarisationsachsen des Vektorgraphenfilms angeordnet sind.

Für das binokulare Sehen, also ohne Polarisationsbrille, ist der Vektorgraphenfilm ohne Wirkung. Das LCD-Display arbeitet dann im "Normalzustand". Dabei sind allerdings die einzelnen LCD-Elemente entsprechend zu schalten.

Grundlage dafür, daß diese Anordnung funktioniert, sind bei der Benutzung der Polarisationsbrille die örtlichen Summeneigenschaften der Rezeptorelemente des Auges.

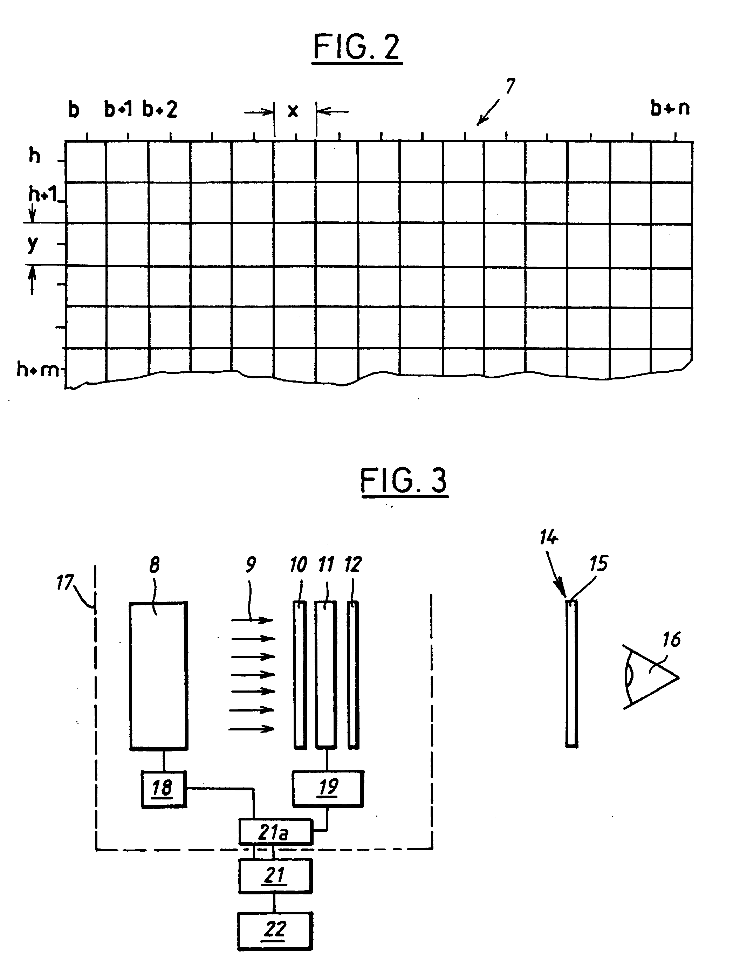

Damit das zur Durchführung der Erfindung benötigte LCD-Display und der sich auf seiner Vorderseite befindliche Vektorgraphenfilm zusammenpassen, müssen, die flächigen Dimensionen gewisse Bedingungen erfüllen. Dies sei anhand der Fig. 2 erläutert. Diese sind notwendig, wenn nicht jedem diskreten LCD-Element des Displays auch diskret jeweils ein entsprechend großes Element des Vektorgraphenfilms zugeordnet ist.

Bezeichnet man bei dem Display die horizontal angeordneten Flüssigkristall-Elemente mit $b(1)$, $b(1) + 1$, $b(1) + 2$, ..., $b(1) + n(1)$ und die vertikal angeordneten Flüssigkristall-Elemente mit $h(1)$, $h(1) + 1$, $h(1) + 2$, $h(1) + n(1)$, so hat das Flüssigkristall-Element oben links die Matrix-Adresse $b(1)$, $h(1)$ und das Element unten rechts die Matrix-Adresse $b(1) + n(1)$, $h(1) + m(1)$. Entsprechendes gilt für die Flächenelemente des Vektorgraphenfilms $b(2)$, $b(2) + 1$, $b(2) + 2$, ... $B(2) + n(2)$ und $h(2)$, $h(2) + 1$, $H(2) + 2$, ... $H(2) + m(2)$. Die zu erfüllenden Bedingungen lauten dann

$$\Sigma\ b(1) + n(1) = z\ {}^{*}\ \Sigma\ b(2) + n(2)\ \text{mit}\ z\ \varepsilon\ N\ ;\ b(1) + n(1) > z$$

$$\Sigma\ h(1) + m(1) = z\ {}^{*}\ \Sigma\ h(2) + m(2)\ \text{mit}\ z\ \varepsilon\ N\ ;\ h(1) + m(1) > z$$

mit N = natürliche Zahlen
d.h. die Anzahl der Flüssigkristall-Elemente und der entsprechenden Flächenelemente des Vektorgraphenfilms dürfen nur um ein ganzzahlige Vielfaches voneinander abweichen, ohne daß Randunschärfen bei den dargestellten Zeichen auftreten. Es ergeben sich aber Auflösungsverluste bei der Darstellung von Zeichen außer bei $z = 1$.

Die folgenden Fig. 3, 4a, 4b, 5 und 6 sind Prinzipskizzen, anhand derer unterschiedliche Ausgestaltungsvarianten der Erfindung erläutert werden sollen.

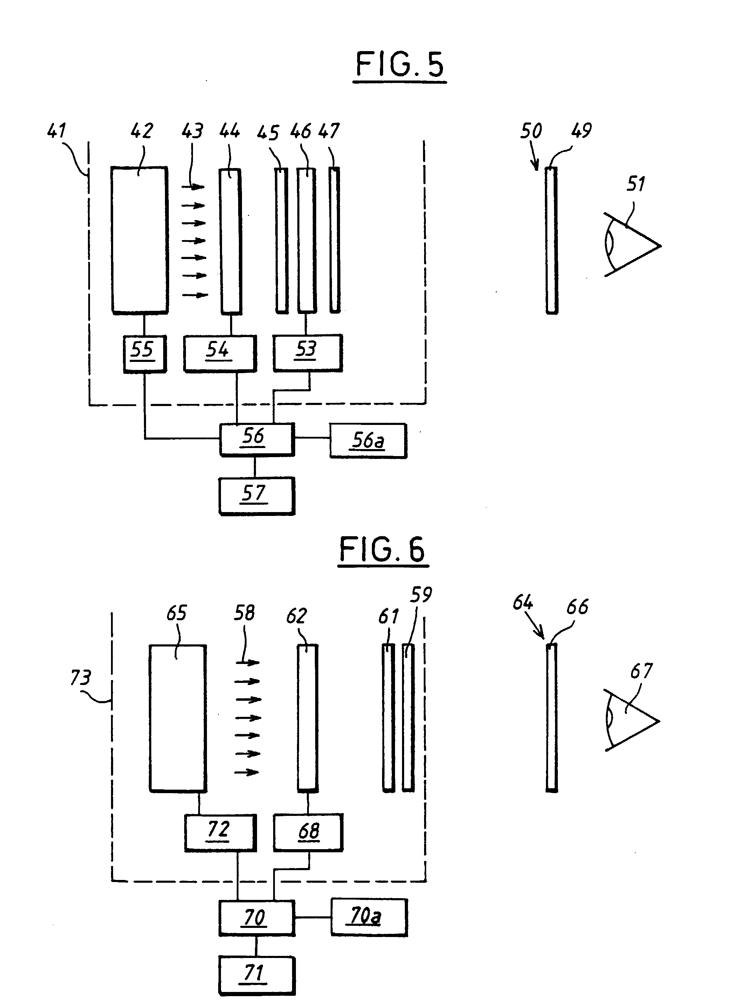

Die nachfolgenden Figurenbeschreibung handelt nur von Sehprüfsystemen. Außer zur Sehprüfung können aber insbesondere die in den Fig. 3 und 5 dargestellten Anordnungen auch als Bilderzeugungssysteme, bzw. Flachbildschirme mit stereoskopischen Bildeindruck, sofern eine konstante Zuordnung der Bildelemente (LCD-Elemente) zu den übertragenden Informationen erfolgt.

Für die Prüfung der verschiedenen binokularen und monokularen Sehfunktionen müssen die entsprechenden Sehzeichen unter verschiedenen Bedingungen dargeboten werden.

Zur Prüfung der binokularen Sehfunktionen setzt man dem Proband eine Brille (14) mit je einem Polarisationsfilterscheibe (15) für jedes Auge (16) auf. Die Polarisationsfilterscheiben (15) sind so in die Brille (14) eingesetzt, daß die Polarisationsachsen der beide Polarisationsfilterscheiben (15) aufeinander möglichst senkrecht stehen.

Zur Durchführung der Prüfung der binokularen Sehfunktionen muß das Sehprüfgerät (17) mindestens folgende Darbietungsarten realisieren können:

1) Teile eines Sehtestzeichens erscheinen dunkel für ein Auge vor hellem Hintergrund;

2) Teile eines Sehtestzeichens erscheinen hell für ein Auge vor dunklem Hintergrund;

3) unterschiedliche Teile eines Sehtestzeichens erscheinen dunkel für beide Augen vor hellem Hintergrund;

4) unterschiedliche Teile eines Sehtestzeichens erscheinen hell für beide Augen vor dunklem Hintergrund;

(d.h. bei 1) und 2), das die für das eine Auge sichtbaren Teile des Sehzeichens für das andere Auge unsichtbar sind).

Die Prüfung der monokularen Sehfunktionen kann auch ohne Polarisationsbrille (14) erfolgen, wobei mindestens folgende Bedingungen realisiert werden müssen:

5) Sehzeichen erscheint für beide Augen dunkel auf hellem Hintergrund.

6) Sehzeichen erscheint für beide Augen hell auf dunklem Hintergrund.

Bei der Prüfung der Farbtüchtigkeit ist es außerdem notwendig, daß folgende Bedingungen realisiert werden können:

7) Teile eines Sehtestzeichens erscheinen unterschiedlich farbig für die beiden Augen vor andersfarbigem Hintergrund;

8a) Sehzeichen erscheint farbig für beide Augen vor hellem Hintergrund;

8b) Sehzeichen erscheint farbig für beide Augen vor dunklem Hintergrund.

Um die Bedingungen 1) - 4) realisieren zu können, muß das erfindungsgemäße Sehprüfgerät (17) wie folgt aufgebaut sein: Eine Lichtquelle (8) beleuchtet mit ihrem Licht (9) eine erste farbneutrale, durchsichtige Polarisationsfolie (10). Das durch die erste Polarisationsfolie (10) fallende Licht durchdringt ein LCD-Display (11), welcher als Bildschirm dient, und beleuchtet einen farbneutralen Vektographenfilm (12). Das durch den Vektographenfilm (12) fallende leicht verläßt das Sehprüfgerät (17).

Vor jedem Auge (16) des zu prüfenden Probanden befindet sich ein farbig neutrales, durchsichtiges Polarisationsfilterscheibe (15). Das LCD-Display (11) ist mit einer Treiberschaltung (19) verbunden. Die Treiberschaltungen (19) ist mit einer Schalteinrichtung (21) verbunden. Diese Schalteinrichtung (21) ist über eine als Tastatur (22) ausgeführte Eingabeeinheit beeinflußbar und steuert die Treiberschaltung (19) an. Die Schalteinrichtung (21) und die Tastatur (22) kann sich in, bzw. an dem Sehprüfgerät (17) befinden oder über eine gemäß dem bekannten Stand der Technik (z.B. Kabelverbindung, Infrarot- oder Ultraschallverbindung) gestaltete Fernsteuerung eine Umschaltung der Sehzeichen in dem Sehprüfgerät (17) bewirken.

Will man auch die Sehfähigkeit des Probanden in Abhängigkeit von der Leuchtdichte und dem Kontrast Prüfen, so wird durch die mit der Lichtquelle (8) verbundene, von der Schalteinrichtung (21) angesteuerte Lichtquellentreiberschaltung (18) zusätzlich die Lichtquelle (8) in ihrer Intensität beeinflußt.

Selbstverständlich kann man mit diesem Sehprüfgerät (17) auch die monokularen und die beidäugigen (ohne Trennung der Seheindrücke des rechten und linken Auges) Sehfunktionen überprüfen, da mit dem Sehprüfgerät (17) auch die Bedingungen 5 und 6 realisiert werden können. Dabei kann der Proband die Polarisationsbrille (14) auflassen oder abnehmen.

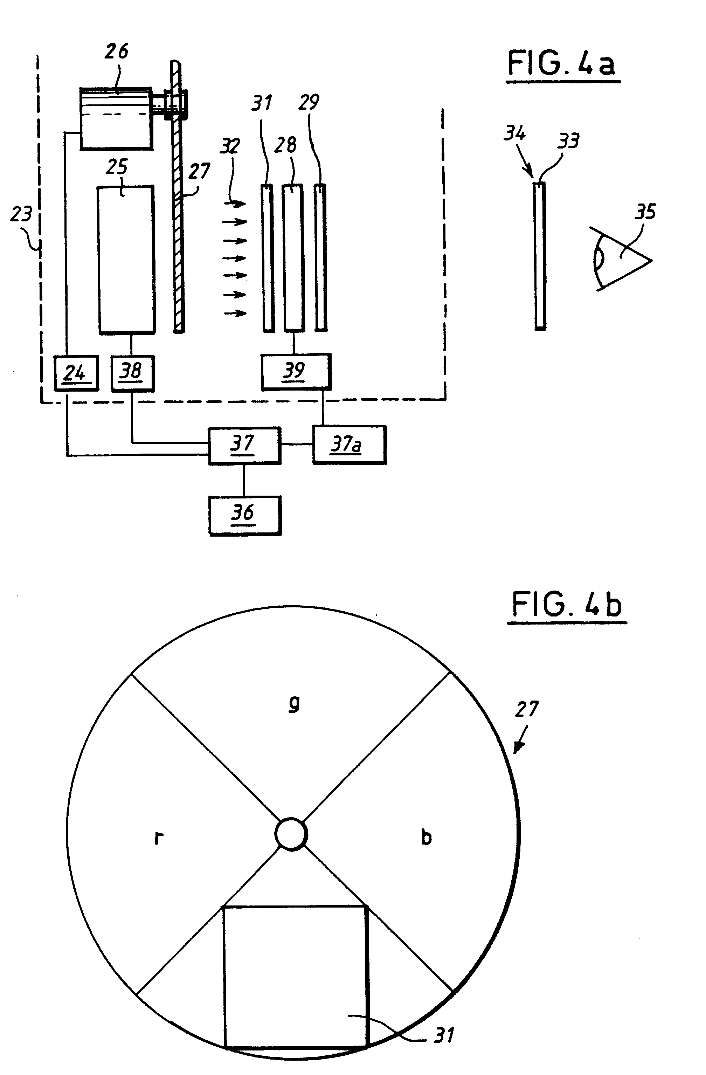

Soll auch eine Überprüfung der Farbtüchtigkeit des Probanden erfolgen, so muß das Sehprüfgerät in der Lage sein, die Sehzeichen und auch Teile davon in Farbe darzustellen. In den folgenden Fig. 4a, 5 und 6 sind Sehprüfsysteme gemäß der Erfindung beschrieben, die dazu in der Lage sind.

In Fig. 4a ist die einfachste Gestaltung eines derartigen, farbtüchtigen Sehprüfgerätes (23) schematisch dargestellt. Es besteht aus einer Polarisationsfolie (31), einem als Bildschirm dienenden LCD-Display (28) und einem Vektorgraphenfilm (29). Das LCD-Display (28) ist über ihre Treiberschaltung (39) mit der Schalteinrichtung (37) verbunden, an welcher sich eine Tastatur (36) als Eingabeeinheit befindet. Zwischen Treiberschaltung (39) und Schalteinrichtung (37) befindet sich ein Speicher (37a), in welchem alle darzustellenden Zeichen gespeichert sind.

Außer diesen bereits in Fig. 3 beschriebenen Elementen des Sehprüfgerätes (17) ist in diesem Sehprüfgerät (23) eine Farbfilterscheibe (27) vorhanden, welche durch einen Motor 126) gedreht werden kann. Über die Tastatur (36) kann an die Schalteinrichtung (37) die Eingabe erfolgen, daß ein bestimmtes Farbfilter (z.B. rot (r), gelb (g), blau (b), neutral (n); wie in Fig. 4b dargestellt) sich vor der Lichtquelle (25) befinden soll.

In der Schalteinrichtung (37) wird daraufhin die momentane Stellung der Farbfilterscheibe (27) überprüft und wenn sich die Farbfilterscheibe (27) nicht in der gewünschten Position befindet, die Motoransteuerung (24) des Motors (26) der Farbfilterscheibe (27) veranlaßt, die Farbfilterscheibe (27) in die gewünschte Stellung zu drehen. In Fig. 4b ist die Farbfilterscheibe (27) noch einmal in Frontalansicht dargestellt, sowie der Bereich der Polarisationsfolie (31).

Mit der Farbfilterscheibe (27) aus Fig. 4a und 4b kann man nur die Farbe des ganzen Beleuchtungslichtes (32) verändern. Eine farbige Darstellung mit unterschiedlichen Farben ist nicht möglich. Deshalb ist in Fig. 5 die Farbfilterscheibe (27) mit Motor (26) und Motoransteuerung (24) durch ein Farb-LCD (44) (z.B. farbige Flüssigkristall-Bilderzeugungseinrichtung gemäß der US-PS 4 877 309) mit Ansteuerungsschaltung (54) ersetzt, wobei die Ansteuerungsschaltung (54) mit der Schalteinrichtung (56) verbunden ist. An dieser Schalteinrichtung (56) ist eine Tastatur (57) als Eingabeeinheit angeschlossen.

Das Licht (43) der Lichtquelle (42) gelangt zuerst durch das Farb-LCD (44). Dort wird es in seiner Farbe in gewünschter Art und Weise verändert. Erst dann erfolgt die Erzeugung der Sehzeichen durch das Polarisationsfilter (45); das als Bildschirm dienende LCD-Display (46) und durch den Vektorgraphenfilm (47). Die Lichtquelle (42) kann von der Schalteinrichtung (56) über die Lichtquellentreiberschaltung (55) in ihrer Intensität beeinflußt werden. Das LCD-Display (46) ist über seine Treiberschaltung (53) mit der Schalteinrichtung (56) verbunden. Die Schalteinrichtung (56) ist als Computer (Rechner) ausgeführt und besitzt einen Speicher (56a), in welchem alle darzustellenden Zeichen gespeichert sind.

Die Augen (51) des Probanden können dann durch die Polarisationsbrille (50) mit den beiden Polarisationsfilterscheiben (49) ein farbiges Bild sehen.

Die Auflösung dieses Farb-LCD's (44) ist dabei der Auflösung des anderen LCD's (46) gemäß den gemachten Ausführungen zur Auflösung anzupassen.

Mit einem derartig ausgestatteten Sehprüfgerät (41) ist sowohl eine farbige Gestaltung der darstellbaren Sehzeichen als auch eine Darstellung von bewegten Sehzeichen möglich.

Eine Vereinfachung des Aufhaus des Sehprüfgeräts (41) aus Fig. 5 kann man erreichen, wenn man das Polarisationsfilter POL I (2) und das LCD-Display (3) ganz durch ein Farb-LCD (62) mit Ansteuerungsschaltung (68) ersetzt (siehe Figur 6). Dabei dient nun das Farb-LCD (62) selbst als Bildschirm und sendet linear polarisiertes Licht aus.

Dann dringt das Licht (58) der Lichtquelle (65) zuerst durch das Farb-LCD (62). Das aus dem Farb-LCD (62) austretende Licht mit dem gewünschten Sehzeichen wird von diesem in der gewünschten Art gedreht. Mit einer Tastatur (71) als Eingabeeinheit kann man über die Schalteinrichtung (70) sowohl die Lichtquellentreiberschaltung (72) als auch die Ansteuerungsschaltung (68) des Farb-LCDs (62) beeinflussen. Die Schalteinrichtung (70) ist als Computer (Rechner) ausgeführt und besitzt einen Speicher (70a), in welchem alle darzustellenden Zeichen gespeichert sind. Vor dem LCD-Display (62) befindet sich der Vektorgraphenfilm (61) eine Lambda-Viertel-Folie (59), wobei letztere das durch sie dringende Licht entweder links oder rechts zirkular polarisiert.

In der Brille (64) vor den Augen (67) des Probanden befindet sich auf den Filterscheiben nicht nur Polarisationsfolien sondern zusätzlich auch Lambda-Viertel-Folien (66), so daß die Bedingungen 1 - 4, 5 und 6 als auch die Bedingungen 7, 8a und 8b zur Prüfung der Sehfähigkeit des Probanden realisiert werden können.

Die Verwendung der Lambda-Viertel-Folien auf den Polarisationsfolien (61, 64) hat den Vorteil, daß nun auch bei Schrägstellung des Kopfes des Probanden die Augen des Probanden nur jeweils das sehen, was sie sehen sollen.

Das Sehprüfgerät gemäß der Erfindung zeichnet sich durch seine kompakte, Störungsunanfällige Bauweise aus und erlaubt sowohl eine Überprüfung der monokularen und binokularen Sehfunktionen als auch eine Überprüfung der Farbtüchtigkeit des Probanden.

Die beschriebene Polarisationsbrille kann auch als ein auf steckbarer Aufsatz ausgeführt sein, welche auf eine normale Brille des Probanden zur Überprüfung der Sehfunktionen lediglich aufgesteckt wird.

**Patentansprüche**

1. Sehprüfsystem zum Testen des Sehvermögens der Augen eines Probanden mit einer polarisiertes Licht ausstrahlenden Bilderzeugungseinrichtung, welche viele einzeln ansteuerbare Bilderzeugungsbereiche auf einem Bildschirm aufweist und einer Polarisationsbrille vor den Augen des Probanden, wobei auf dem Bildschirm (3, 11, 28, 46, 60, 80, 87) Bilderzeugungsbereiche (81, 88, a-l, A-L, a-i, A-l) mit einer festen geometrischen Anordnung zueinander angeordnet sind, wobei vor dem Bildschirm (3, 11, 28, 46, 60, 80, 87) ein Vektorgraphenfilm (4, 12, 29, 47, 61, 82, 90) angebracht ist, dessen Polarisationselemente (83, 91) jeweils einen Bilderzeugungsbereich (83, 91, a-l, A-L, a-i, A-l) vollständig abdecken, wobei die Polarisationselemente (83, 91) auf dem Vektorgraphenfilm (4, 12, 29, 47, 61, 82, 90) in einem Muster angeordnet sind, wobei die Polarisationsachsen benachbarter Polarisationselemente (83, 91) des Vektorgraphenfilmes zumindest in einer Achse aufeinander senkrecht stehend sind, wobei die Polarisationsachsen der Polarisationsfolie der Filterscheiben (6, 7, 84a, 84b, 92a, 92b) der Polarisationsbrille (5, 84, 92) zueinander senkrecht stehend sind und mit den Polarisationsachsen der Polarisationselemente (83, 91) des Vektorgraphenfilms (4, 12, 29, 47, 61, 82, 90) richtungsmäßig übereinstimmen, mit einem Speicher (37a, 56a, 70a) in dem Bilder mit Sehtestzeichen zur Darstellung auf dem Bildschirm abgespeichert sind und mit einer Eingabeeinheit (3b, 22, 36, 57, 71, 80b, 87b), über die der Speicher zur Erzielung von Bildschirmänderungen verbunden ist, wobei über die Eingabeeinheit die dargebotene Bildinformation derart umschaltbar ist, daß die in einem Bild einem Auge dargebotenen Bildteile nach Umschaltung nur dem jeweils anderen Auge dargeboten werden.

2. Sehprüfsystem nach Anspruch 1, wobei die abgespeicherten Bilder Bildteile enthalten, die jeweils nur einem Auge und davon verschiedene Teile, die beiden Augen identisch dargeboten werden.

3. Sehprüfsystem nach Anspruch 1 oder 2, wobei die abgespeicherten Bilder Bildteile enthalten, die den beiden Augen in verschiedenen Farben vor verschiedenfarbigem Hintergrund dargeboten werden.

4. Sehprüfsystem nach einem der Ansprüche 1 - 3, dadurch gekennzeichnet, daß sich der Speicher (53, 68) in einem Rechner (56, 70) befindet.

5. Sehprüfsystem nach einem der Ansprüche 1 - 4, dadurch gekennzeichnet, daß der Bildschirm (3, 11, 28, 46, 60, 80, 87) ein Flach-Bildschirm ist.

6. Sehprüfsystem nach Anspruch 5, dadurch gekennzeichnet, daß auf der Rückseite des Bildschirms (3, 11, 28, 46, 60, 87) mindestens eine Lichtquelle (1, 85, 8, 25, 42, 65) angebracht ist, von welcher der Bildschirm (3, 11, 28, 46, 60, 87) durchleuchtet wird.

7. Sehprüfsystem nach Anspruch 6, dadurch gekennzeichnet, daß die Lichtquelle (8, 25, 42, 65) in ihrer Intensität von der Schalteinrichtung (21, 37, 56, 70) veränderbar ist.

8. Sehprüfsystem nach Anspruch 6 oder 7, dadurch gekennzeichnet, daß eine erste Polarisationsfolie I (2, 86, 10, 31, 45) zwischen Lichtquelle (1, 85, 8, 25, 42) und einer den Bildschirm bildenden LCD-Elementanordnung (3, 87, 11, 28, 46) angeordnet ist, deren Polarisationsachse zu den Polarisationsachsen des Vektorgraphenfilms (4, 90, 12, 29, 47) einen Winkel von 45° hat.

9. Sehprüfsystem nach Anspruch 8, dadurch gekennzeichnet, daß zwischen Bildschirm (89) und Vektorgraphenfilm (90) eine zweite Polarisationsfolie II (89) angeordnet ist, deren Polarisationsachse senkrecht oder parallel zur Polarisationsachse der ersten Polarisationsachse I (86) ausgerichtet ist.

10. Sehprüfsystem nach Anspruch 6, dadurch gekennzeichnet, daß die Lichtquelle (42) in der Farbe des von ihr ausgesendeten Lichtes von der Schalteinrichtung (56) veränderbar ist.

11. Sehprüfsystem nach einem der Ansprüche 1 - 10, dadurch gekennzeichnet, daß der Bildschirm ein farbige Bilder erzeugender Bildschirm (62) ist.

12. Sehprüfsystem nach einem der Ansprüche 1 - 11, dadurch gekennzeichnet, daß vor dem Vektorgraphenfilm (61) eine Lambda-Viertel-Folie (59) angebracht ist und auf den Filterscheiben der Polarisationsbrille (64) Lambdaviertel-Folien (66) angebracht sind.

13. Sehprüfsystem nach einem der Ansprüche 1 - 12, dadurch gekennzeichnet, daß die Eingabeeinheit (3b, 22, 36, 57, 71, 80b, 87b) über eine Treiberschaltung (3a, 19, 39, 53, 68, 80a, 87a) zum einzelnen Ansteuern der diskreten Bilderzeugungsbereiche (81, 88, a-l, A-L, a-i, A-l) ausgestattet ist.

**14.** Verfahren zur Prüfung des Sehvermögens eines Probanden mit den Schritten:

- Darstellen von abgespeicherten Sehtestzeichen mit einer Bilderzeugungseinrichtung, welche viele einzeln ansteuerbare Bilderzeugungsbereiche auf einem Bildschirm aufweist, wobei auf dem Bildschirm (3, 11, 28, 46, 60, 80, 87) Bilderzeugungsbereiche (81, 88, a-l, A-L, a-i, A-l) mit einer festen geometrischen Anordnung zueinander angeordnet sind, wobei vor dem Bildschirm (3, 11, 28, 46, 60, 80, 87) ein Vektorgraphenfilm (4, 12, 29, 47, 61, 82, 90) angebracht ist, dessen Polarisationselemente (83, 91) jeweils einen Bilderzeugungsbereich (83, 91, a-l, A-L, a-i, A-l) vollständig abdecken, wobei die Polarisationselemente (83, 91) auf dem Vektorgraphenfilm (4, 12, 29, 47, 61, 82, 90) in einem Muster angeordnet sind, wobei die Polarisationsachsen benachbarter Polarisationselemente (83, 91) des Vektorgraphenfilmes zumindest in einer Achse aufeinander senkrecht stehend sind,

- beobachten der Sehtestzeichen mit einer Polarisationsbrille (5, 84, 92), wobei die Polarisationsachsen der Polarisationsfolien der Filterscheiben (6, 7, 84a, 84b, 92a, 92b) der Polarisationsbrille (5, 84, 92) zueinander senkrecht stehend sind und mit den Polarisationsachsen der Polarisationselemente (83, 91) des Vektorgraphenfilms (4, 12, 29, 47, 61, 82, 90) richtungsmäßig übereinstimmen, und

- umschalten der dargestellten Bildinformationen über eine Eingabeeinheit (36, 57, 71) derart, daß die in einem Bild einem Auge dargebotenen Bildteile nach Umschaltung nur dem jeweils anderen Auge dargeboten werden.

**15.** Verfahren nach Anspruch 14, dadurch gekennzeichnet, daß Bildteile jeweils nur einem Auge des Probanden dargeboten werden und davon verschiedene Bildteile beiden Augen identisch dargeboten werden.

**16.** Verfahren nach Anspruch 14 oder 15, dadurch gekennzeichnet, daß Bildteile den beiden Augen jeweils in verschiedenen Farben vor verschiedenfarbigem Hintergrund dargeboten werden.

**17.** Verfahren nach einem der Ansprüche 14 - 16, dadurch gekennzeichnet, daß bewegte Bildteile dargeboten werden.

## Claims

**1.** Vision testing system for proving the visual faculty of a testing person's eyes with a image display emitting polarized light, which comprises a plurality of triggerable image display areas arranged thereon, and polarization spectacles in front of the test person's eyes, wherein image display areas (81, 88, a-1, A-L, a-i, A-l) are arranged on the image display (3, 11, 28, 46, 60, 80, 87) having a fixed geometrical arrangement to each other, wherein a vectograph film (4, 12, 29, 47, 61, 82, 90)is disposed forward of said image display (3, 11, 28, 46, 60, 80, 87) having a plurality of polarization elements (83, 91) with each of said polarization elements completely covering at least one of said image display areas (83,91, a-1, A-L, a-i, A-l) wherein said polarization elements being arranged on said vectograph film (4, 12, 29, 47, 61, 82, 90) in a pattern, wherein adjacent polarization elements (83, 91) of the vectograph film having polarization axis being mutually perpendicular in respect of at least one axis, wherein the polarization axis of the polarization film of the polarization spectacles mutually perpendicular, wherein the polarization axis of the polarization foils of the filter disc (6, 7, 84a, 84b, 92a, 92b) of the polarization spectacle (15, 84, 92) are mutually perpendicular and extending in the same direction as the polarization axis of the polarization elements (83, 91) of said vectograph films (4, 12, 29, 47, 61, 82, 90), with a memory (37a, 56a, 70a) steering pictures showing vision testing symbols for the display on the image display and with an input unit (3b, 22, 36, 57, 71, 80b, 87b) wherein the memory is connected with the input unit to obtain a change of the image display in such a manner, that the shown details of a symbol shown to one eye are shown only the other eye of the testing person after a changing.

**2.** Vision testing system of claim 1, wherein the stored pictures comprising details, which are shown only one of the eyes and other details which are shown both eyes identically.

**3.** Vision testing system of claim 1 or 2, wherein the stored pictures comprises details, which are shown the eyes of the testing person in different colours and in front of a background having different colours.

**4.** Vision testing system of one of the claims 1-3, wherein the memory (53, 68) is arranged in a computer (56, 70).

**5.** Vision testing system of one of the claims 1-4, wherein the image display (3, 11, 28, 46, 60, 80, 87) is a flat image screen.

**6.** Vision testing system of claim 5, wherein at least one light source (1, 85, 8, 25, 42, 65) is arranged on the backside of the image display (3, 11, 28, 46, 60, 87) for emitting light transluminating said image display (3, 11, 28, 46, 66, 80, 87) with light.

**7.** Vision testing system of claim 6, wherein the intensity of the light of said light source (8, 25, 42, 65) is changeable by the switching element (21, 37, 56, 70).

**8.** Vision testing system of claim 6 or 7, wherein a first polarization foil I (2, 86, 10, 31, 45) is arranged between the light source (1, 85, 8, 25, 42) and a LCD arrangement (3, 87, 11, 28, 46) as the image display and wherein the polarization axis of the first polarization foil I is arranged under an angle of 45 degree to the polarization axis of the vectograph film (4, 90, 12, 29, 47).

**9.** Vision testing system of claim 8, wherein a second polarisation film II (89) is arranged between the image display (89) and the vectograph film (90) which comprises in respect to the first polarization axis (86) perpendicular or parallel orientated polarization axis.

**10.** Vision testing system of claim 6, wherein the colour emitted light of the light source (42) is changeable by the switching element (56).

**11.** Vision testing system of one of the claims 1-10, wherein the image display is a colour pictures generating display (62).

**12.** Vision testing system of one of the claims 1-12 wherein a $\lambda/4$ - foil (59) is disposed in front of the vectograph film (61) and wherein $\lambda/4$-foils (66) are arranged on the filter discs of the polarization spectacles (64).

**13.** Vision testing system of one of the claims 1-12, wherein the input unit (3b, 22, 36, 57, 71, 80b, 87b) is equiped to drive individual ones of said image display areas (81, 88, a-1, A-L, a-i, A-I) via a drive circuit (3a, 19, 39, 53, 68, 80a, 87a).

**14.** Method for testing the visual power of a test person comprising the following steps:

- displaying of stored visual testing symbols with an image display device, which comprises a plurality of individual image display areas wherein on the image display (3, 11, 28, 46, 60, 80, 87) image display areas (81, 88, a-1, A-L, a-i, A-I) are configured in a geometric mutually fixed position, wherein the vectograph film (4, 12, 29, 47, 61, 82, 90) and each polarization element (83, 91) of the vectograph film is covering one image display area (83, 91, a-1, A-L, a-i, A-I) completely, wherein said polarization elements (83, 91) are configured on the vectograph film (4, 12, 29, 47, 61, 82, 90) in a pattern, wherein the polarization axis of adjacent polarization elements (83, 91) of the vectograph film are mutually perpendicular in respect of at least one axis.

- watching the vision test symbols with the polarisation spectacles (5, 84, 92), wherein the polarization axis of the polarization foils of the filter discs (6, 7, 84a, 84b, 92a, 92b) of the polarization spectacles (5, 84, 92) are mutually perpendicular, which are corresponding with the polarization axis of the polarization elements (83, 91) of the vectograph film in respect of the direction, and

- switching of the shown image information by the input unit (36, 57, 71) in such a manner, that after a switching the details of one picture shown to one eye are shown only to the other eye.

**15.** Method of claim 14, wherein details of the picture are shown only to one of the testing person's eyes and thereon different details of the picture shown both eyes identically.

**16.** Method of claim 14 or 15, wherein details of the picture are shown in different colours in front of backgrounds of different colours.

**17.** Method of one of the claims 14-16, wherein moved details of the picture are shown.

**Revendications**

1. Système de contrôle de la vision destiné à tester la faculté visuelle des yeux d'un sujet avec un générateur d'images qui émet de la lumière polarisée présentant une multitude de secteurs générateurs d'image individuellement réglables sur un écran et avec des lunettes de polarisation disposées devant les yeux du sujet, où des secteurs générateurs d'image (81, 88, a-l, A-L, a-i, A-l) sont agencés sur l'écran (3, 11, 28, 46, 60, 80, 87) dans une disposition géométrique fixe, où un film vectographique (4, 12, 29, 47, 61, 82, 90) est disposé devant l'écran (3, 11, 28, 46, 60, 80, 87), dont les éléments polarisants (83, 91) recouvrent respectivement l'un des secteurs générateurs d'image (83, 91, a-l, A-L, a-i, A-l) dans son intégralité, où les éléments polarisants (83, 91) sont aménagés sur le film vectographique (4, 12, 29, 47, 61, 82, 90) selon un schéma donné, où les axes de polarisation d'éléments polarisants voisins (83, 91) du film vectographique sont perpendiculaires l'un à l'autre dans un axe au moins et où les axes de polarisation des feuilles polarisantes des verres filtrants (6, 7, 84a, 84b, 92a, 92b) des lunettes de polarisation (5, 84, 92) sont perpendiculaires l'un à l'autre et correspondent par leur orientation aux axes de polarisation des éléments polarisants (83, 91) du film vectographique (4, 12, 29, 47, 61, 82, 90), ainsi qu'avec une mémoire (37a, 56a, 70a) dans laquelle sont stockées des images d'optotypes devant être visualisés sur l'écran et avec une unité d'introduction (3b, 22, 36, 57, 71, 80b, 87b) reliée à ladite mémoire en vue de la modification des visualisations sur l'écran, où l'information visuelle reproduite sur l'écran est commutable au niveau de l'unité d'introduction de manière à ce que les composantes de l'image perçues par un oeil du sujet ne soient visibles respectivement que par l'autre oeil après la commutation.

2. Système de contrôle de la vision selon la revendication 1, où les images mises en mémoire comprennent des composantes qui ne sont visualisées respectivement que pour un seul oeil et d'autres composantes qui sont visualisées de manière identique pour les deux yeux.

3. Système de contrôle de la vision selon la revendication 1 ou 2, où les images mises en mémoire comprennent des composantes qui sont reproduites dans les deux yeux avec des couleurs différentes devant un fond différemment coloré.

4. Système de contrôle de la vision selon l'une des revendications 1 à 3, caractérisé en ce que la mémoire (53, 68) se trouve dans un ordinateur (56, 70).

5. Système de contrôle de la vision selon l'une des revendications 1 à 4, caractérisé en ce que l'écran (3, 11, 28, 46, 60, 80, 87) est un écran plat.

6. Système de contrôle de la vision selon la revendication 5, caractérisé en ce qu'une source de lumière (1, 85, 8, 25, 42, 65) au moins est aménagée sur le dos de l'écran (3, 11, 28, 46, 60, 87), qui illumine l'écran (3, 11, 28, 46, 60, 87) par transparence.

7. Système de contrôle de la vision selon la revendication 6, caractérisé en ce que l'on peut faire varier l'intensité de la source de lumière (8, 25, 42, 65) depuis un dispositif commutateur (21, 37, 56, 70).

8. Système de contrôle de la vision selon la revendication 6 ou 7, caractérisé en ce qu'une première feuille de polarisation I (2, 86, 10, 31, 45) est disposée entre la source de lumière (1, 85, 8, 25, 42) et un dispositif d'éléments d'affichage à cristaux liquides formant écran (3, 87, 11, 28, 46), dont l'axe de polarisation forme un angle de 45° avec les axes de polarisation du film vectographique (4, 90, 12, 29, 47).

9. Système de contrôle de la vision selon la revendication 8, caractérisé en ce qu'une seconde feuille de polarisation II (89) est disposée entre l'écran (87) et le film vectographique (90) dont l'axe de polarisation est orienté perpendiculairement ou parallèlement à l'axe de polarisation de la première feuille de polarisation I (86).

10. Système de contrôle de la vision selon la revendication 6, caractérisé en ce que la source de lumière (42) permet un réglage de la couleur de la lumière qu'elle émet à partir du dispositif commutateur (56).

11. Système de contrôle de la vision selon l'une des revendications 1 à 10, caractérisé en ce que l'écran est un écran visualisant des images en couleurs (62).

12. Système de contrôle de la vision selon l'une des revendications 1 à 11, caractérisé en ce que des feuilles quart d'onde (59) et (66) sont disposées respectivement devant le le film vectographique (61) et sur les verres filtrants des lunettes de polarisation (64).

13. Système de contrôle de la vision selon l'une des revendications 1 à 12, caractérisé en ce que l'unité d'introduction (3b, 22, 36, 57, 71, 80b, 87b) permet de commander individuellement les secteurs générateurs d'image (81, 88, a-l, A-L, a-i, A-I) par l'intermédiaire d'un circuit pilote (3a, 19, 39, 53, 68, 80a, 87a).

14. Procédé de contrôle de la faculté visuelle d'un sujet comprenant les étapes suivantes:

- Visualisation d'optotypes mis en mémoire à l'aide d'un générateur d'images présentant sur un écran une multitude de secteurs générateurs d'image individuellement réglables, où des secteurs générateurs d'image (81, 88, a-l, A-L, a-i, A-I) sont agencés sur l'écran (3, 11, 28, 46, 60, 80, 87) dans une disposition géométrique fixe, où un film vectographique (4, 12, 29, 47, 61, 82, 90) est disposé devant l'écran (3, 11, 28, 46, 60, 80, 87), dont les éléments polarisants (83, 91) recouvrent respectivement l'un des secteurs générateurs d'image (81, 88, a-l, A-L, a-i, A-I) dans son intégralité, où les éléments polarisants (83, 91) sont aménagés sur le film vectographique (4, 12, 29, 47, 61, 82, 90) selon un schéma donné et où les axes de polarisation d'éléments polarisants voisins (83, 91) du film vectographique sont perpendiculaires l'un à l'autre dans un axe au moins,

- observation des optotypes avec des lunettes de polarisation (5, 84, 92), où les axes de polarisation des feuilles polarisantes des verres filtrants (6, 7, 84a, 84b, 92a, 92b) des lunettes de polarisation (5, 84, 92) sont perpendiculaires l'un à l'autre et correspondent par leur orientation aux axes de polarisation des éléments polarisants (83, 91) du film vectographique (4, 12, 29, 47, 61, 82, 90), et

- commutation de l'information visuelle au niveau d'une unité d'introduction (36, 57, 71), de manière à ce que les composantes d'une image qui sont perçues par un oeil du sujet ne soient visibles que par l'autre oeil après la commutation.

15. Procédé selon la revendication 14, caractérisé en ce que des composantes de l'image ne sont reproduites respectivement que dans un seul oeil du sujet et que d'autres composantes sont reproduites de manière identique dans les deux yeux.

16. Procédé selon la revendication 14 ou 15, caractérisé en ce que des composantes de l'image sont reproduites dans les deux yeux respectivement avec des couleurs différentes devant un fond différemment coloré.

17. Procédé selon l'une des revendications 14 à 16, caractérisé en ce que des composantes de l'image reproduites sont mobiles.

FIG.1a

FIG. 1b

LQ 1  POL I 2  LCD 3  POL II 4  BRILLE 5  L 6  R 7

FIG.1c

BRILLE 5
L R
6 7

POL II
4

LCD
3

POL I
2

LQ
1

FIG.1d

BRILLE 5
L R
6 7

POL II
4

LCD
3

POL I
2

LQ
1

LQ    POL I    LCD    POL I'    POL II    BRILLE
L    R

85
86
87
88
89
90
91
92    92a    92b

87a    87b

FIG.1e

EP 0 595 023 B1

## FIG. 2

## FIG. 3

FIG. 4a

FIG. 4b

## FIG. 5

## FIG. 6

20